# EUROPÄISCHE PATENTSCHRIFT

(11) **EP 3 931 452 B1**
(45) Veröffentlichungstag und Bekanntmachung des Hinweises auf die Patenterteilung: **07.06.2023**
(21) Anmeldenummer: 20703432.3
(22) Anmeldetag: 03.02.2020
(51) Int. Cl.: F16B 13/08

(54) **SPREIZVERBINDER**
EXPANSION CONNECTOR
CHEVILLE À EXPANSION

(30) Priorität: 25.02.2019 DE 202019101077 U
(43) Veröffentlichungstag der Anmeldung: 05.01.2022
(73) Patentinhaber: Häfele Berlin GmbH & Co KG, 12307 Berlin (DE)
(72) Erfinder: MERZ, Ulrich, 93059 Regensburg (DE)
(74) Vertreter: Kohler Schmid Möbus Patentanwälte
(86) Internationale Anmeldenummer: PCT/EP2020/052556
(87) Internationale Veröffentlichungsnummer: WO 2020/173664

(56) Entgegenhaltungen:
- WO-A1-2018/197219
- DE-U1-202015 105 030
- IT-A1- UB20 152 418
- US-A1- 2005 042 027

## Beschreibung

Die Erfindung betrifft einen Spreizverbinder zur Verbindung zweier Teile, insbesondere Möbelplatten, gemäß dem Oberbegriff von Anspruch 1. Der Spreizverbinder eignet sich insbesondere für Teile (Platten) aus Span-, MDF- oder holzähnlichen Materialien.

Ein derartiger Spreizverbinder ist beispielsweise aus der US 2005/042027 A1 bekannt geworden.

Spreizverbinder werden entweder in die stirnseitige Bohrung der einen zu fügenden Platte oder in die flächenseitige Bohrung der anderen zu fügenden Platte vorgesteckt. Um hierbei die genaue Position des Spreizverbinders in axialer Richtung zu gewährleisten, besitzen Spreizverbinder an ihrer Spreizmuffe einen Anschlagring, welcher ein zu tiefes Einstecken der Spreizmuffe in die Bohrung verhindert. Ist der Anschlagring zu klein oder zu dünn ausgeführt, besteht die Gefahr, dass die Spreizmuffe zu tief in die Bohrung rutschen kann. Ist der Anschlagring zu groß oder zu dick ausgeführt, besteht die Gefahr, dass nach dem Anziehen eine sichtbare Fuge zwischen den Platten verbleibt. Beim Vorstecken von Spreizverbindern in die stirnseitige Querbohrung besteht häufig das Problem, dass der Spreizverbinder zu locker sitzt und herausfallen kann oder zu stramm sitzt und nur schwer einzustecken ist.

Bei dem aus der US 2005/042027 A1 bekannten Spreizverbinder liegt die Spreizmuffe innenseitig in der Ausgangsstellung am zylindrischen Bolzenschaft und am konischen Spreizkonus an. Durch eine Verschiebung der Spreizmuffe relativ zum Bolzen werden die Spreizlaschen der Spreizmuffe durch den Spreizkonus aus der nicht-gespreizten Ausgangsstellung radial nach außen in die Endstellung aufgespreizt.

Der vorliegenden Erfindung liegt demgegenüber die Aufgabe zugrunde, bei einem Spreizverbinder der eingangs genannten Art eine Fugenbildung zwischen zwei zu verbindenden Teilen sicher zu verhindern.

Diese Aufgabe wird erfindungsgemäß durch einen Spreizverbinder mit den Merkmalen von Anspruch 1 gelöst. Vorzugsweise ist der Bolzen aus Metall und mit der Spreizmuffe umspritzt.

Erfindungsgemäß sind in der Endstellung die zweiten Laschenabschnitte radial nach außen und die ersten Laschenabschnitte mitsamt ihren Kragen radial nach innen geschwenkt. Dieser Wippmechanismus bewirkt das Zurückziehen der Kragen radial nach innen und hat zudem zur Folge, dass zwischen Spreizkonus und Spreizmuffe ein selbsthemmendes System entsteht, welches die auf den Spreizkonus wirkenden Zugkräfte radial nach außen in eine Bohrungswandung umleitet. Dieses neue Wirkprinzip verspricht vor allem bei Platten von geringerer Materialdichte bessere Belastungswerte.

Besonders bevorzugt ist am Bolzenschaft zwischen Bolzenkopf und Spreizkonus ein Ringbund vorgesehen, an dem die ersten Laschenabschnitte in der Ausgangsstellung radial anliegen und der in der Endstellung an den ersten Laschenabschnitten axial vorbeigeschoben ist. Der Ringbund verhindert, dass die Kragen in der Ausgangsstellung radial nach innen ausgelenkt werden können.

Vorzugsweise verjüngen sich in der Ausgangsstellung die ersten Laschenabschnitte innenseitig und/oder die zweiten Laschenabschnitte außenseitig in Richtung auf den Spreizkonus, um so einen Freiraum für das Verschwenken der Spreizlaschen zu schaffen. Statt verjüngen können die Außen- bzw. Innendurchmesser der ersten und zweiten Laschenabschnitte alternativ auch stufen- oder absatzweise abnehmen.

Bevorzugt sind die ersten Laschenabschnitte, insbesondere am bolzenkopfzugewandten Laschenende, miteinander durch Verbindungsstege verbunden, die dann in der Endstellung plastisch verformt sind. In der Ausgangsstellung können die zweiten Laschenabschnitte miteinander durch Sollbruchstellen verbunden und mit ihren freien Enden bereits auf dem Spreizkonus angeordnet sein. Vorteilhaft können zumindest die zweiten Laschenabschnitte außenseitig eine z.B. widerhakenähnliche Verrippung aufweisen, um die aufgespreizte Spreizmuffe fest in einer Bohrung zu verankern.

In einer besonders bevorzugten Ausführungsform der Erfindung ist zwischen Bolzenkopf und Spreizmuffe, insbesondere zwischen Bolzenkopf und Ringbund, auf dem Bolzenschaft ein Kunststoff-Zentrierelement angeordnet, das einen zum Bolzen koaxialen Steck- bzw. Außendurchmesser definiert. Vorzugsweise ist der Bolzen mit dem Zentrierelement umspritzt. Das Zentrierelement dient zum Vorstecken des Spreizverbinders in einer Bohrung eines zu fügenden Teils, wobei der Außendurchmesser geringfügig größer als der Bohrungsdurchmesser gewählt ist, um einen festen Sitz in der Bohrung zu erreichen. Optional kann das Zentrierelement mindestens zwei, insbesondere einander bezüglich des Bolzens gegenüberliegende, radial federnde Außenseiten aufweisen, um Bohrungstoleranzen auszugleichen und für einen zusätzlichen Anpressdruck zu sorgen.

Die Erfindung betrifft auch eine Anordnung mit zwei Teilen, die mittels eines wie oben ausgebildeten Spreizverbinders miteinander verbunden sind, wobei die Spreizmuffe des Spreizverbinders in eine Bohrung des einen, ersten Teils eingesteckt ist und die Spreizlaschen durch den Spreizkonus jeweils um die Kante des Führungsabschnitts geschwenkt sind, wodurch die zweiten Laschenabschnitte radial nach außen bis zur Anlage an der Bohrungswandung der ersten Bohrung und die ersten Laschenabschnitte radial nach innen geschwenkt sind. Dadurch werden die Kragen radial nach innen in die Bohrungen hineingezogen, so dass zwischen den beiden Teilen keine sichtbare Fuge verbleibt.

Vorzugsweise weist der Spreizverbinder zwischen Bolzenkopf und Spreizmuffe, insbesondere zwischen Bolzenkopf und Ringbund, auf dem Bolzenschaft ein Kunststoff-Zentrierelement auf, das in die Bohrung des zweiten Teils eingesteckt ist. Das Zentrierelement weist radial federnde Außenseiten auf, die einen zum Bolzen koaxialen Steck- bzw. Außendurchmesser definieren, welcher geringfügig größer als der Bohrungsdurchmesser ist. Diese federnden Außenseiten können Bohrungstoleranzen ausgleichen und wirken, insbesondere wenn sie über eine außenseitige Verrippung als Rückhaltekrallen verfügen, einem unerwünschten Herausfallen des Spreizverbinders aus der Bohrung entgegen.

Weitere Vorteile der Erfindung ergeben sich aus der Beschreibung, den Ansprüchen und der Zeichnung. Ebenso können die vorstehenden genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Seitenansicht des erfindungsgemäßen Spreizverbinders in seiner Ausgangsstellung; und
- Fign. 2a, 2b: einen Längsschnitt des erfindungsgemäßen Spreizverbinders in seiner nicht-gespreizten Ausgangsstellung (Fig. 2a) und in seiner gespreizten Endstellung (Fig. 2b) bei der Verbindung zweier Möbelplatten.

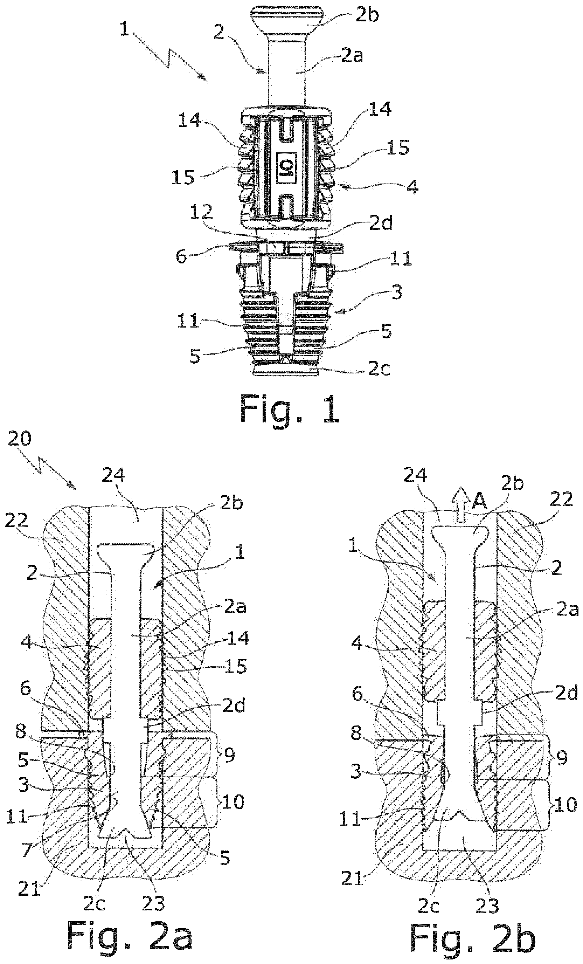

Der in **Fig. 1** in seiner Ausgangsstellung gezeigte Spreizverbinder **1** umfasst einen Bolzen **2**, eine auf dem Bolzen 2 verschiebbare Kunststoff-Spreizmuffe **3** und ein auf dem Bolzen 2 angeordnetes Kunststoff-Zentrierelement **4**. Der Bolzen 2 ist z.B. aus Stahl und mit der Spreizmuffe 3 und dem Zentrierelement 4 umspritzt.

Der Bolzen 2 weist einen zylindrischen Bolzenschaft **2a,** einen Bolzenkopf **2b** am einen Bolzenende, einem sich in Richtung auf den Bolzenkopf 2b verjüngenden Spreizkonus **2c** am anderen Bolzenende und einen am Bolzenschaft 2a vorgesehenen Ringbund **2d** zwischen Bolzenkopf 2b und Spreizkonus 2c auf.

Die Spreizmuffe 3 ist zwischen Ringbund 2 und Spreizkonus 2c auf dem Bolzen 2 angeordnet und weist zwei einander bezüglich des Bolzens 2 gegenüberliegende Spreizlaschen **5** auf, an deren dem Bolzenkopf 2b zugewandten Laschenende jeweils ein Kragen **6** radial nach außen vorsteht. Die Kragen 6 können besonders dick und wiederstandfähig ausgeführt sein. Die Spreizlaschen 5 liegen am Bolzenschaft 2a jeweils mit einem Führungsabschnitt **7** an, dessen dem Bolzenkopf 2b zugewandte Kante **8** vom bolzenkopfzugewandten Laschenende axial beabstandet ist. Diese Kante 8 teilt die Spreizlaschen 5 jeweils in einen dem Bolzenkopf 2b zugewandten, ersten Laschenabschnitt **9** und einen dem Bolzenkopf 2b abgewandten, zweiten Laschenabschnitt **10** auf. Die ersten Laschenabschnitte 9 sind vom Bolzenschaft 2a radial beabstandet und liegen auf axialer Höhe der Kragen 6 radial am Ringbund 2d an. Die ersten Laschenabschnitte 9 verjüngen sich innenseitig und die zweiten Laschenabschnitte 10 außenseitig jeweils in Richtung auf den Spreizkonus 2c. Die freien Enden der zweiten Laschenabschnitte 10 sind auf dem Spreizkonus 2c angeordnet. Weiterhin weisen die ersten und zweiten Laschenabschnitte 9, 10 außenseitig eine widerhakenähnliche Verrippung **11** auf. Die Spreizlaschen 5 sind am bolzenkopfzugewandten Laschenende durch Verbindungsstege **12** dauerhaft verbunden. Die bolzenkopfzugewandten Laschenenden und die Verbindungsstege 12 bilden zusammen einen Ring aus.

Das muffenförmige Zentrierelement 4 ist zwischen Bolzenkopf 2a und Ringbund 2d auf dem Bolzenschaft 2a möglichst unverschiebbar angeordnet. Das Zentrierelement 4 weist zwei einander bezüglich des Bolzens 2 gegenüberliegende, radial federnde Außenwände **14** mit jeweils einer widerhakenähnlichen Verrippung **15** auf, welche einen zum Bolzen 2 koaxialen Steck- bzw. Außendurchmesser definiert.

**Fign. 2a, 2b** zeigen eine Möbelanordnung **20** mit zwei zu fügenden Möbelplatten **21, 22** aus Span-, MDF- oder holzähnlichen Materialien und mit dem Spreizverbinder 1.

In Fig. 2a ist der Spreizverbinder 1 einerseits mit seiner Spreizmuffe 3 in eine stirnseitige Bohrung **23** der einen, ersten Möbelplatte 21 eingesteckt, bis die Kragen 6 an der ersten Platte 21 anliegen, und andererseits mit seinem Zentrierelement 4 in eine flächenseitige Bohrung **24** des anderen, zweiten Möbelplatte 22 eingesteckt. Die Kragen 6 verhindern ein zu tiefes Einstecken des Spreizverbinders 1 in die stirnseitige Bohrung 23, und durch die Verrippung 11 der ersten Laschenabschnitte 9, deren Steck- bzw. Außendurchmesser geringfügig größer als der Bohrungsdurchmesser der stirnseitigen Bohrung 23 ist, ist die Spreizmuffe 3 in der stirnseitigen Bohrung 23 zurückgehalten. Das Zentrierelement 4 ist durch seine Verrippung 15, deren Steck- bzw. Außendurchmesser geringfügig größer als der Bohrungsdurchmesser der flächenseitigen Bohrung 24 ist, in der flächenseitigen Bohrung 23 zurückgehalten, wobei die radial nach innen ausgelenkten federnden Außenseiten 14 für einen zusätzlichen Anpressdruck der Verrippung 11 an die Bohrungswandung sorgen. Wie in Fig. 2a gezeigt, liegen die beiden Möbelplatten 21, 22 wegen der dazwischen befindlichen Kragen 6 nicht aneinander an.

Mittels eines in der zweiten Möbelplatte 22 angeordneten, am Bolzenkopf 2a angreifenden Anzugselements (nicht gezeigt) wird der Bolzen 2 in Richtung **A** gezogen und dadurch der Spreizverbinder 1 aus seiner in Fig. 2a gezeigten, nicht-gespreizten Ausgangsstellung in die in Fig. 2b gezeigte, gespreizte Endstellung überführt. Durch die Verschiebung des Bolzens 2 gegenüber der Spreizmuffe 3 wird einerseits der Ringbund 2d an den ersten Laschenabschnitten 9 axial vorbeigeschoben, und andererseits werden die zweiten Laschenabschnitte 10 durch den Spreizkonus 2c radial nach außen aufgespreizt. Das Aufspreizen der zweiten Laschenabschnitte 10 bewirkt, dass die Spreizlaschen 5 jeweils um die Kante 8 des Führungsabschnitts 7 wippenartig verschwenken und dabei die Verbindungsstege 12 plastisch verformt werden. Durch das Verschwenken der Spreizlaschen 5 werden einerseits die zweiten Laschenabschnitte 10 radial nach außen geschwenkt und dabei mit ihren Verrippungen 11 in die Bohrungswandung der ersten Bohrung 23 eingedrückt, und andererseits werden die ersten Laschenabschnitte 10 radial nach innen, z.B. bis zur Anlage an den Bolzenschaft 2a, geschwenkt, wodurch die Kragen 6 in die Bohrungen 23, 24 hineingezogen werden und keine sichtbare Fuge zwischen den beiden Möbelplatten 21, 22 verbleibt.

## Patentansprüche

1. Spreizverbinder (1) zur Verbindung zweier Teile (21, 22), insbesondere Möbelplatten, aufweisend
- einen Bolzen (2) mit einem zylindrischen Bolzenschaft (2a), mit einem Bolzenkopf (2b) am einen Bolzenende und mit einem sich in Richtung auf den Bolzenkopf (2b) verjüngenden Spreizkonus (2c) am anderen Bolzenende, und
- eine auf dem Bolzen (2) verschiebbar gelagerte Kunststoff-Spreizmuffe (3) mit mindestens zwei Spreizlaschen (5), welche jeweils an ihrem dem Bolzenkopf (2b) zugewandten Laschenende einen radial nach außen vorstehenden Kragen (6) aufweisen,
wobei die Spreizmuffe (3) aus einer nicht-gespreizten Ausgangsstellung durch eine Verschiebung relativ zum Bolzen (2) in eine gespreizte Endstellung überführbar ist, in der die Spreizlaschen (5) durch den Spreizkonus (2c) radial nach außen aufgespreizt sind,
wobei in der Ausgangsstellung die Spreizlaschen (5) am Bolzenschaft (2a) jeweils mit einem Führungsabschnitt (7) anliegen, dessen dem Bolzenkopf (2b) zugewandte Kante (8) vom bolzenkopfzugewandten Laschenende axial beabstandet ist und wobei in der Endstellung die Spreizlaschen (5) jeweils um die Kante (8) des Führungsabschnitts (7) geschwenkt sind, **dadurch gekennzeichnet,**
**dass** die Kante (8) die Spreizlaschen (5) jeweils in einen dem Bolzenkopf (2b) zugewandten, ersten Laschenabschnitt (9) und einen dem Bolzenkopf (2b) abgewandten, zweiten Laschenabschnitt (10) aufteilt und dass in der Ausgangsstellung die ersten Laschenabschnitte (9) vom Bolzenschaft (2a) radial beabstandet sind.

2. Spreizverbinder nach Anspruch 1, **dadurch gekennzeichnet, dass** am Bolzenschaft (2a) zwischen Bolzenkopf (2b) und Spreizkonus (2c) ein Ringbund (2d) vorgesehen ist, an dem die ersten Laschenabschnitte (9) in der Ausgangsstellung radial anliegen und der in der Endstellung an den ersten Laschenabschnitten (9) axial vorbeigeschoben ist.

3. Spreizverbinder nach Anspruch 1 oder 2, **dadurch gekennzeichnet, dass** in der Endstellung die ersten Laschenabschnitte (9) bis zur Anlage an den Bolzenschaft (2a) geschwenkt sind.

4. Spreizverbinder nach einem der vorhergehenden Ansprüche, **dadurch gekennzeichnet, dass** sich in der Ausgangsstellung die ersten Laschenabschnitte (9) innenseitig und/oder die zweiten Laschenabschnitte (10) außenseitig in Richtung auf den Spreizkonus (2c) verjüngen.

5. Spreizverbinder nach einem der vorhergehenden Ansprüche, **dadurch gekennzeichnet, dass** die ersten Laschenabschnitte (9), insbesondere am bolzenkopfzugewandten Laschenende, miteinander durch Verbindungsstege (12) verbunden sind, die in der Endstellung plastisch verformt sind.

6. Spreizverbinder nach einem der vorhergehenden Ansprüche, **dadurch gekennzeichnet, dass** in der Ausgangsstellung die freien Enden der zweiten Laschenabschnitte (10) auf dem Spreizkonus (2c) angeordnet sind.

7. Spreizverbinder nach einem der vorhergehenden Ansprüche, **dadurch gekennzeichnet, dass** zumindest die zweiten Laschenabschnitte (10) außenseitig eine insbesondere widerhakenähnliche Verrippung (11) aufweisen.

8. Spreizverbinder nach einem der vorhergehenden Ansprüche, **dadurch gekennzeichnet, dass** der Bolzen (2) aus Metall ist und mit der Spreizmuffe (3) umspritzt ist.

9. Spreizverbinder nach einem der vorhergehenden Ansprüche, **dadurch gekennzeichnet, dass** zwischen Bolzenkopf (2b) und Spreizmuffe (3), insbesondere zwischen Bolzenkopf (2b) und Ringbund (2d), auf dem Bolzenschaft (2a) ein Kunststoff-Zentrierelement (4) angeordnet ist, das einen zum Bolzen (2) koaxialen Außendurchmesser definiert.

10. Spreizverbinder nach Anspruch 9, **dadurch gekennzeichnet, dass** das Zentrierelement (4) mindestens zwei, insbesondere einander bezüglich des Bolzens (2) gegenüberliegende, radial federnde Außenseiten (14) aufweist.

11. Spreizverbinder nach Anspruch 10, **dadurch gekennzeichnet, dass** die federnden Außenseiten (14) eine insbesondere widerhakenähnliche Verrippung (15) aufweisen

12. Spreizverbinder nach einem der Ansprüche 9 bis 11, **dadurch gekennzeichnet, dass** der Bolzen (2) aus Metall ist und mit dem Zentrierelement (4) umspritzt ist.

13. Anordnung (20) mit zwei Teilen (21, 22), die mittels eines Spreizverbinders (1) nach einem der vorhergehenden Ansprüche miteinander verbunden sind, wobei die Spreizmuffe (3) in eine Bohrung (23) des einen, ersten Teils (21) eingesteckt ist und die Spreizlaschen (5) durch den Spreizkonus (2c) jeweils um die Kante (8) des Führungsabschnitts (7) geschwenkt sind, wodurch die zweiten Laschenabschnitte (10) radial nach außen bis zur Anlage an der Bohrungswandung der ersten Bohrung (23) und die ersten Laschenabschnitte (9) mitsamt ihren Kragen (6) radial nach innen geschwenkt sind.

14. Anordnung nach Anspruch 13, **dadurch gekennzeichnet, dass** der Spreizverbinder (1) zwischen Bolzenkopf (2b) und Spreizmuffe (3), insbesondere zwischen Bolzenkopf (2b) und Ringbund (2c), auf dem Bolzenschaft (2a) ein Kunststoff-Zentrierelement (4) aufweist, das einen zum Bolzen (2) koaxialen Außendurchmesser aufweist und in eine Bohrung (24) des anderen, zweiten Teils (23) eingesteckt ist.

## Claims

1. An expansion connector (1) for connecting two parts (21, 22), in particular furniture panels, comprising
- a bolt (2) with a cylindrical bolt shaft (2a), with a bolt head (2b) at one bolt end and with an expansion cone (2c), tapering in the direction towards the bolt head (2b), at the other bolt end, and
- a plastics expansion sleeve (3) which is mounted displaceably on the bolt (2) and which has at least two expansion tabs (5), each of which has a radially outwardly protruding collar (6) at their tab end facing the bolt head (2b),
wherein the expansion sleeve (3) can be transferred, by a displacement relative to the bolt (2), from a non-expanded starting position into an expanded end position in which the expansion tabs (5) are radially outwardly expanded by the expansion cone (2c),
wherein in the starting position, the expansion tabs (5) bear against the bolt shaft (2a) in each case by way of a guide portion (7) whose edge (8) facing the bolt head (2b) is axially spaced apart from the tab end facing the bolt head and wherein in the end position, the expansion tabs (5) are each pivoted about the edge (8) of the guide portion (7),
**characterized in that**
the edge (8) divides the expansion tabs (5) in each case into a first tab portion (9) facing the bolt head (2b) and a second tab portion (10) facing away from the bolt head (2b), and that in the starting position the first tab portions (9) are radially spaced apart from the bolt shaft (2a).

2. The expansion connector as claimed in claim 1, **characterized in that** an annular flange (2d), against which the first tab portions (9) radially bear in the starting position and which, in the end position, is axially slid past the first tab portions (9), is provided on the bolt shaft (2a), between the bolt head (2b) and the expansion cone (2c).

3. The expansion connector as claimed in claim 1 or 2, **characterized in that**, in the end position, the first tab portions (9) are pivoted until they bear against the bolt shaft (2a).

4. The expansion connector as claimed in one of the preceding claims, **characterized in that**, in the starting position, the first tab portions (9) taper on the inner side and/or the second tab portions (10) taper on the outer side in the direction towards the expansion cone (2c).

5. The expansion connector as claimed in one of the preceding claims, **characterized in that** the first tab portions (9), in particular at the tab end facing the bolt head, are connected to one another by connecting webs (12) which are plastically deformed in the end position.

6. The expansion connector as claimed in one of the preceding claims, **characterized in that**, in the starting position, the free ends of the second tab portions (10) are arranged on the expansion cone (2c).

7. The expansion connector as claimed in one of the preceding claims, **characterized in that** at least the second tab portions (10) have an in particular barb-like ribbing (11) on the outer side.

8. The expansion connector as claimed in one of the preceding claims, **characterized in that** the bolt (2) is made of metal and is overmolded with the expansion sleeve (3).

9. The expansion connector as claimed in one of the preceding claims, **characterized in that** a plastics centering element (4) is arranged on the bolt shaft (2a), between the bolt head (2b) and the expansion sleeve (3), in particular between the bolt head (2b) and the annular flange (2d), said plastics centering element defining an outer diameter that is coaxial with respect to the bolt (2).

10. The expansion connector as claimed in claim 9, **characterized in that** the centering element (4) has at least two radially resilient outer sides (14) which in particular lie opposite one another with respect to the bolt (2).

11. The expansion connector as claimed in claim 10, **characterized in that** the resilient outer sides (14) have an in particular barb-like ribbing (15).

12. The expansion connector as claimed in one of claims 9 to 11, **characterized in that** the bolt (2) is made of metal and is overmolded with the centering element (4).

13. An arrangement (20) comprising two parts (21, 22) which are connected to one another by means of an expansion connector (1) as claimed in one of the preceding claims, wherein the expansion sleeve (3) is inserted into a bore (23) of the one, first part (21) and the expansion tabs (5) are each pivoted about the edge (8) of the guide portion (7) by the expansion cone (2c), as a result of which the second tab portions (10) are pivoted radially outward until they bear against the bore wall of the first bore (23) and the first tab portions (9) together with their collars (6) are pivoted radially inward.

14. The arrangement as claimed in claim 13, **characterized in that** the expansion connector (1) has a plastics centering element (4) on the bolt shaft (2a), between the bolt head (2b) and the expansion sleeve (3), in particular between the bolt head (2b) and the annular flange (2c), said plastics centering element having an outer diameter that is coaxial with respect to the bolt (2) and being inserted into a bore (24) of the other, second part (23).

## Revendications

1. Pièce d'assemblage (1) expansible, dévolue à la liaison de deux parties (21, 22) et notamment de panneaux de meubles, comprenant
- une cheville (2) munie d'un fût cylindrique (2a), d'une tête (2b) à l'une des extrémités de la cheville et, à l'autre extrémité de ladite cheville, d'un cône d'écartement (2c) s'amenuisant en direction de ladite tête (2b) de ladite cheville, et
- un manchon expansible (3) en matière plastique, monté à coulissement sur ladite cheville (2) et doté d'au moins deux pattes déployables (5) comportant, à chaque fois, une collerette (6) radialement en saillie vers l'extérieur à leur extrémité pointant vers la tête (2b) de la cheville,
ledit manchon expansible (3) pouvant être transféré à partir d'une position initiale non déployée, sous l'effet d'un coulissement par rapport à ladite cheville (2), à une position finale de déploiement dans laquelle lesdites pattes déployables (5) sont déployées radialement vers l'extérieur par le cône d'écartement (2c),
sachant que, dans ladite position initiale, lesdites pattes déployables (5) sont respectivement en applique contre le fût (2a) de la cheville par une zone de guidage (7) dont l'arête (8), pointant vers la tête (2b) de ladite cheville, est située axialement à distance de l'extrémité desdites pattes qui pointe vers ladite tête de la cheville, et sachant que, dans ladite position finale, lesdites pattes déployables (5) sont respectivement animées de pivotements autour de ladite arête (8) de ladite zone de guidage (7), **caractérisée par le fait**
**que** l'arête (8) scinde, à chaque fois, les pattes déployables (5) en un premier tronçon (9) tourné vers la tête (2b) de la cheville et en un second tronçon (10) tourné à l'opposé de ladite tête (2b) de ladite cheville ; et par le fait que, dans la position initiale, les premiers tronçons (9) des pattes se trouvent radialement à distance du fût (2a) de ladite cheville.

2. Pièce d'assemblage expansible selon la revendication 1, **caractérisée par le fait qu'**il est prévu sur le fût (2a) de la cheville, entre la tête (2b) de ladite cheville et le cône d'écartement (2c), un collet annulaire (2d) contre lequel les premiers tronçons (9) des pattes sont radialement en applique dans la position initiale et qui est animé, dans la position finale, de coulissements axiaux en regard desdits premiers tronçons (9) desdites pattes.

3. Pièce d'assemblage expansible selon la revendication 1 ou 2, **caractérisée par le fait que** les premiers tronçons (9) des pattes sont animés de pivotements, dans la position finale, jusqu'à venir en applique contre le fût (2a) de la cheville.

4. Pièce d'assemblage expansible selon l'une des revendications précédentes, **caractérisée par le fait que**, dans la position initiale, les premiers tronçons (9) des pattes et/ou les seconds tronçons (10) desdites pattes s'amenuisent en direction du cône d'écartement (2c), respectivement du côté intérieur et du côté extérieur.

5. Pièce d'assemblage expansible selon l'une des revendications précédentes, **caractérisée par le fait que** les premiers tronçons (9) des pattes sont reliés mutuellement, en particulier à l'extrémité desdites pattes qui pointe vers la tête de la cheville, par des membrures de liaison (12) déformées plastiquement dans la position finale.

6. Pièce d'assemblage expansible selon l'une des revendications précédentes, **caractérisée par le fait que**, dans la position initiale, les extrémités libres des seconds tronçons (10) des pattes sont disposées sur le cône d'écartement (2c).

7. Pièce d'assemblage expansible selon l'une des revendications précédentes, **caractérisée par le fait qu'**au moins les seconds tronçons (10) des pattes sont pourvus, extérieurement, d'un nervurage (11) notamment semblable à des ardillons.

8. Pièce d'assemblage expansible selon l'une des revendications précédentes, **caractérisée par le fait que** la cheville (2) consiste en du métal et est enrobée, par injection, à l'aide du manchon expansible (3).

9. Pièce d'assemblage expansible selon l'une des revendications précédentes, **caractérisée par le fait qu'**un élément de centrage (4) en matière plastique, interposé entre la tête (2b) de la cheville et le manchon expansible (3), notamment entre ladite tête (2b) de la cheville et le collet annulaire (2d) sur le fût (2a) de ladite cheville, définit un diamètre extérieur coaxial à ladite cheville (2).

10. Pièce d'assemblage expansible selon la revendication 9, **caractérisée par le fait que** l'élément de centrage (4) compte au moins deux faces extérieures (14) douées d'élasticité radiale et situées, en particulier, en regard l'une de l'autre par rapport à la cheville (2).

11. Pièce d'assemblage expansible selon la revendication 10, **caractérisée par le fait que** les faces extérieures élastiques (14) sont munies d'un nervurage (15) notamment semblable à des ardillons.

12. Pièce d'assemblage expansible selon l'une des revendications 9 à 11, **caractérisée par le fait que** la cheville (2) consiste en du métal et est enrobée, par injection, à l'aide de l'élément de centrage (4).

13. Agencement (20) comprenant deux parties (21, 22) reliées l'une à l'autre au moyen d'une pièce d'assemblage (1) expansible, conforme à l'une des revendications précédentes, le manchon expansible (3) étant emboîté dans un alésage (23) de l'une des parties, ou première partie (21), et les pattes déployables (5) étant respectivement animées, par l'intermédiaire du cône d'écartement (2c), de pivotements autour de l'arête (8) de la zone de guidage (7), de sorte que des pivotements sont imprimés radialement vers l'extérieur aux seconds tronçons (10) des pattes, jusqu'à la venue en applique contre la paroi du premier alésage (23) et, radialement vers l'intérieur, aux premiers tronçons (9) desdites pattes conjointement à leurs collerettes (6).

14. Agencement selon la revendication 13, **caractérisé par le fait que** la pièce d'assemblage (1) expansible est nantie sur le fût (2a) de la cheville, entre la tête (2b) de ladite cheville et le manchon expansible (3), notamment entre ladite tête (2b) de ladite cheville et le collet annulaire (2d), d'un élément de centrage (4) en matière plastique qui, présentant un diamètre extérieur coaxial à ladite cheville (2), est emboîté dans un alésage (24) de l'autre partie, ou seconde partie (22).
